# EUROPEAN PATENT SPECIFICATION

(11) **EP 3 298 203 B1**
(45) Date of publication and mention of the grant of the patent: **18.01.2023**
(21) Application number: 16727779.7
(22) Date of filing: 20.05.2016
(51) Int. Cl.: F24F 13/22, E03B 3/02

(54) **LIQUID MOVEMENT AND/OR COLLECTION APPARATUS AND METHOD**
FLÜSSIGKEITSBEWEGUNG- UND/ODER -SAMMLUNGSVORRICHTUNG UND -VERFAHREN
APPAREIL ET PROCÉDÉ DE COLLECTE ET/OU DE DÉPLACEMENT DE LIQUIDE

(30) Priority: 21.05.2015 GB 201508712
(43) Date of publication of application: 28.03.2018
(73) Proprietor: University of Durham, Durham DH1 3LE (GB)
(72) Inventor: BADYAL, Jas Pal, Wolsingham Durham DH1 3HH (GB); VON SPRECKELSEN, Rowan M., Ewhurst, Surrey GU6 7 SQ (GB); HARRIS, Matthew, Newcastle Upon Tyne NE13 9 DB (GB)
(74) Representative: Wood, Graham
(86) International application number: PCT/GB2016/051452
(87) International publication number: WO 2016/185222

(56) References cited:
- WO-A2-2010/060705
- GB-A- 2 287 200
- GB-A- 2 461 754
- US-A1- 2007 264 922
- US-A1- 2012 073 320

## Description

The present invention relates to the provision of apparatus which can be used to collect and/or move liquid, particularly, although not exclusively, water, which may pass onto a surface of the same naturally as a result of rainfall or other precipitation or from moisture which is present in the environment in the form of fog or mist, or from streams, rivers and the like, or the liquid may be directed onto the apparatus as a result of the deliberate control of the flow of the liquid.

It is estimated that some one in ten people across the world do not have access to clean drinking water and there is a great majority of these people located in poorer countries. There is a clear need to provide affordable, eco-sustainable apparatus and methods for water movement and/or collection and particularly, although not necessarily exclusively, to be able to provide the apparatus and a method in a form which can be implemented in poorer countries of the world.

In addition, there is a need in all countries to provide shelter from rain and conventionally this is achieved by providing fully enclosed buildings and structures with selectively openable windows and doors. In many, hotter countries, there is also a need for the building and structures to be provided at a temperature which is comfortable to live and work in and the conventional solution, where possible is for air conditioning units to be installed and/or relatively sophisticated ventilation systems to be installed. However, these make the buildings significantly more expensive and are a drain on resources which means that the availability of the same is restricted, use of the same can be part time only and/or the provision of the same may not be financially feasible at all for many of the population. US2012/073320 discloses filter apparatus which includes a series of panels with apertures being arranged in sequence in ahousing for use with amoutsure laden ari flow but not in relation to panels for direct imapct by a liquid.

The aim of the present invention is therefore to provide apparatus and a method whereby the collection and/or movement of water can be achieved whilst at the same time allowing the apparatus to be provided of a form which allows the passage of air therethrough.

According to the invention there is provided apparatus for the at least partial collection and/or movement of liquid, said apparatus including at least one panel formed by a series of members which are respectively located and formed so as to define a plurality of slots and/or apertures in the said panel which pass between a first face and an opposing second face of the said at least one panel, the panel is formed with a first group of members which are spaced apart and arranged substantially in parallel and a second group of members which are spaced apart and arranged substantially in parallel and the said second group of members are arranged at an angle offset to the members of the first group of members so as to form a repeating pattern across said at least one panel, characterised in that said at least one panel is an integral unitary structural panel and a support structure locates the said at least one panel such that the first face acts as an upward facing impact surface on which said liquid impacts and locates said panel to lie at an angle to a horizontal plane which is greater than 10_{°} so that the majority of said liquid which impacts on said first face passes across said first face to one or more edges of the at least one panel rather than pass through said plurality of slots and/or apertures.. In one embodiment a third group of members are provided which are spaced apart and arranged substantially in parallel and at an angle which is offset to the members of the first group and at an angle which is substantially equal to, but opposing that, of the members of the second group.

The said members are provided so as to form a mesh. In one embodiment the said members are arranged so as to form a series of substantially diamond, parallelogram and/or polygon shaped apertures across the panel.

In one embodiment the parameters which are controlled for the said panel include any, or any combination of, the size of the apertures defined by the respective members, the shape of the apertures, the angle of offset of the respective members, the arrangement of the mesh pattern with respect to the direction or directions from which the liquid will impact on the panel in use, the arrangements of the mesh pattern with respect to the direction or directions from which the liquid will collect and/or the tilt angle of the panel.

In one embodiment the panel is formed with a substantially uniform mesh pattern. Typically the position of the structure in use is determined and controlled such that the incident liquid stream will contact with a surface of the panel within a predetermined angle range in order to allow the water movement and/or collection performance of the panel to be achieved within a predetermined efficiency range.

In one embodiment tilting the panel by 20° from the horizontal (φ = 70°) is sufficient to yield +99.6% water collection efficiencies.

In one embodiment the surface wettability of the panel surface is controlled in order to control an increase in the value of φ at which the panel will start to allow the liquid to pass through the apertures in the panel rather than be guided across the surface on which the liquid impacts by the members. Surface wettability is accepted in the art as being controllable by varying the surface energy of a surface and/or the surface roughness.

In one embodiment the orientation of the panel with respect to the incident water flow is controlled in order to define the efficiency of water collection and/or movement. In one embodiment, when the rotation angle, β = 0° or 135°, water flows along the members of the panel under the influence of gravity. However, as β approaches 70°, the water is forced to flow over the apertures of the mesh leading to water dripping through the apertures.

In one embodiment the internal angle of the apertures, θ, is controlled.

In one embodiment the panel formed is substantially planar.

In one embodiment there is provided a panel formed as a breathable mesh structure which is used for the diversion of the liquid which impacts a surface of the same.

Typically the panel is provided at an inclined angle to vertical.

In one embodiment the panel, or at least the surface of the panel on which the liquid impacts, is subjected to one or more surface treatments to provide a particular function or performance characteristic.

In one embodiment the treatment is plasma treatment.

In one embodiment the panel, or at least the surface of the panel on which the liquid impacts, is provided so as to act as a switching surface by being oleophobic, oleophilic, hydrophobic and/or hydrophilic and having a breathable mesh structure for liquid diversion.

Typically the panel mesh pattern is scalable depending on the particular use to which the same is to be put.

In one embodiment the said panel is provided to be usable as a filtration means to allow separation of solids from the liquid and/or to allow the separation of different liquids, for example oil and water, by selecting the tilt angle of the one or more panels.

In one embodiment at least the surface of the panel impacted by the liquid is provided as a hydrophilic-oleophobic surface.

In one embodiment at least some of the members are surface formed such as to be puckered so as to influence and control the particular flow of the liquid which has impacted thereon.

In one embodiment the said panel is provided as part of a building structure.

In one embodiment the panel is formed as a weave in a material such as in textiles in order to provide waterproof, breathable fabrics.

In one embodiment an assembly is formed comprising at least two of said panels.

In one embodiment the panels are located substantially in parallel.

In one embodiment the said panels are spaced apart by a predetermined distance.

In one embodiment the panels are provided with mesh patterns of different configurations.

In one embodiment the panels are respectively positioned so as to be offset such that the apertures in the respective panels do not directly underlie each other.

Typically the multi layered assembly leads to a significant improvement in attenuation of water loss (less than 1% drip through for pore size of x = y = 3 mm). Further enhancement in water collection efficiency is attained by controlling the separation distance between the two panels.

In one embodiment the panel or panel assemblies are used alone or as part of apparatus for any, or any combination, of fog/condensation harvesting, rain water collection (for example on sailing boats), filtration, portable rain protection articles, (such as umbrellas, tents or the like), aviation, chemicals processing, healthcare, pharmaceuticals, personal products, food manufacturing, antifouling, antimicrobial, anti-icing, drag reduction, lubrication, automotives and/or breathable architecture structures such as (agriculture, transport, photovoltaics, residential buildings and offices).

For the latter, typically two (or more) panels are used to form the wall or roof which is effectively waterproof, breathable and light transparent and therefore can dramatically reduce the need for air conditioning and ventilation systems to be provided within the buildings formed and hence reduce the energy consumption which is required.

In one embodiment the assembly is used as part of a roof for a building.

In one embodiment the spacing between the panels is adjustable. For example, when the assembly is provided as part of the roof, the space between the panels may be increased when the outside temperature drops to allow cool air to circulate throughout the building, whilst offering protection against rainfall. In hotter temperatures the space between the panels can be reduced to create a less permeable panel in order to assist in retaining the cool air inside the building.

There is provided apparatus which includes at least one panel having a surface located so as to be impacted by a liquid and to allow a majority of the liquid to be moved along the surface and/or collected wherein the said at least one panel is formed as a mesh by a series of members defining apertures therebetween.

The panel therefore has first and second opposing surfaces, said panel formed by a series of members which are respectfully located and formed so as to define a plurality of slots and/or apertures in the said panel and said panel is selectively oriented with respect to the incident flow of a liquid such that the majority of the liquid which is impacted onto one of the said surfaces of the said panels flows across the surface rather than through the said slots and/or apertures.

Specific embodiments of the invention are now provided with reference to the accompanying drawings; wherein
Figures 1a and b illustrate a panel formed in accordance with one embodiment of the invention;
Figure 1c illustrates an assembly formed using a plurality of the panels shown in Figure 1a;
Figure 2 illustrates a further example of a panel formed in accordance with the invention in one embodiment;
Figures 3a-e illustrate test results obtained from using a panel in accordance with one embodiment of the invention;
Figures 4a-c illustrate results obtained from using a multilayer assembly in accordance with one embodiment of the invention;
Figure 5 illustrates a definition of the rotation within the plane of the panel; and
Figures 6a and b illustrate the manner in which the shape of the panel edge and/or at least one surface of the same to allow the collection and/or dispensation of liquid to be determined.

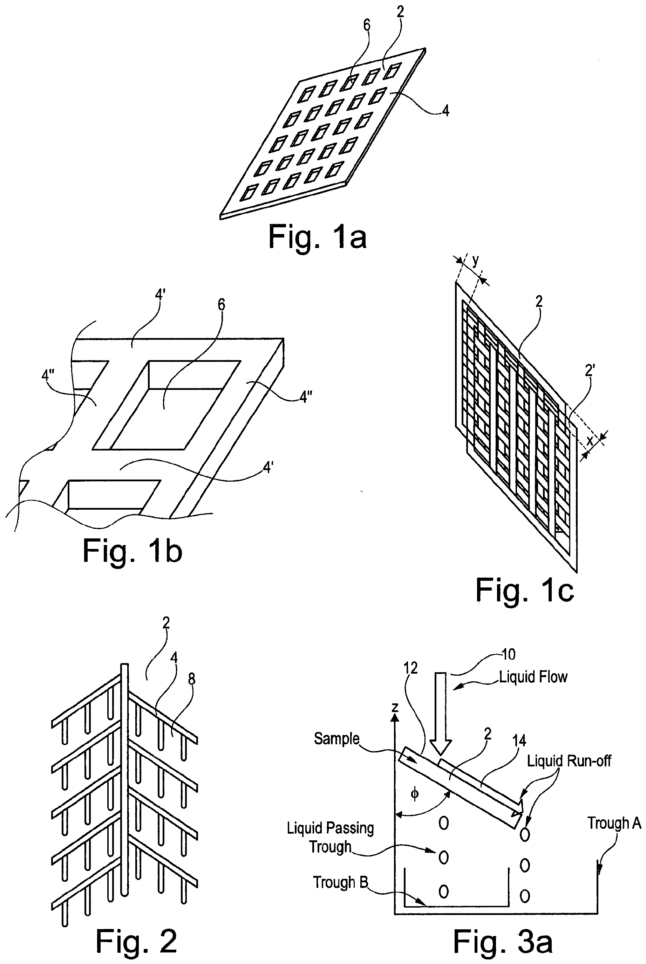

Referring firstly to Figure 1 there is illustrated a panel in accordance with one embodiment of the invention.

The panel 2 comprises a series of members 4 which are arranged so as to define a plurality of apertures 6 in Figure 1a and slots 8 in Figure 2. The members are arranged in two groups as shown in more detail in Figure 1b, with a first group 4' arranged in a first substantially parallel orientation and a second group 4" arranged in a second substantially parallel orientation which is angularly offset to the members of the first group 4'. This angular orientation defines the shape of the apertures 6 therebetween. The members and apertures or slots therefore provide a panel which is provided in the form of a mesh.

Figure 1c illustrates the manner in which a series of panels 2 can be provided together to form a multilayer assembly in which, in this case there are provided two panels 2, 2'; which are spaced apart by a distance X and are provided to lie substantially parallel.

The panels 2, 2' can be of the same or differing mesh configurations and as shown in Figure 2 can be offset by a distance Y.

Typically, in whichever format the panel or panels are provided as part of apparatus which includes a support structure so as to allow the panels to be retained in the appropriate position and angular orientation for use with respect to other elements and/or the environment in which the same are to be used.

Tests of the panel of Figures 1a and c were performed in accordance with the Figures 3a-e. Figure 3a illustrates apparatus used for the measurement of water stream collection efficiency from a water stream 10 which impacts a surface 12 of a panel 2 in accordance with the invention The liquid run off 14 is collected in trough A and the liquid which passes through the panel was collected in trough B.

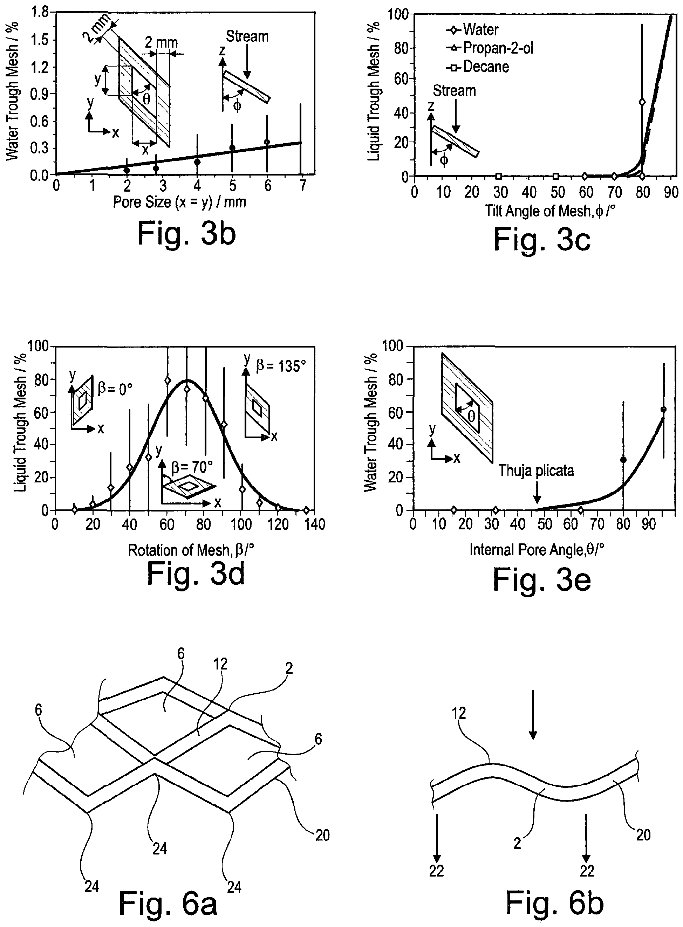

The water stream collection efficiency is indicated in Figure 3b as a function of the values of x and y (aperture size), defined in the inset, where the angle of the members 4', 4" of the panel 2 (θ) is 45°, x = y and the tilt angle of the panel (φ) = 50°.

The liquid stream collection efficiency of the panel 2 as a function of the angle of tilt of the panel ( φ) with an aperture size: x = y = 4 mm and (θ) = 45° is shown in Figure 3c with different liquid being used in the form of water (surface tension of 72.8 mN m⁻¹), propan-2-ol (surface tension of 21.3 mN m⁻¹) and decane (surface tension of 23.8 mN m⁻¹). The error seen on the value for water on the mesh at 80° is due to the transition region between the water running completely along the surface 12 of the panel 2 and passing completely through the apertures in the panel at this angle.

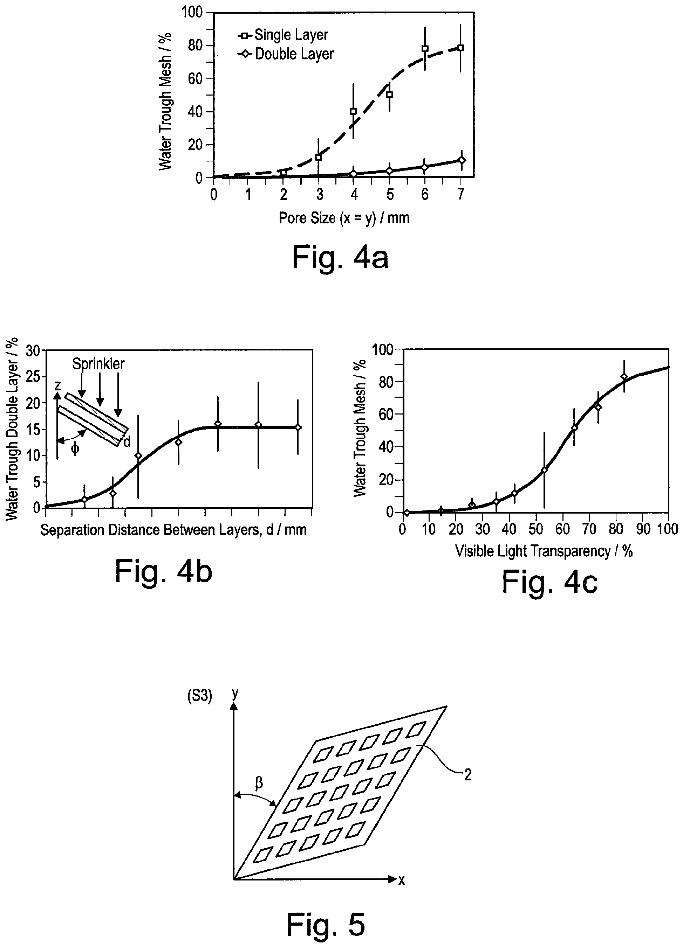

Figure 3d illustrates the water stream collection efficiency of the tilted panel 2 as a function of rotation, β with an aperture size: x = y = 4 mm, (θ) = 45° and (φ)= 60°)and which arrangement is shown in Figure 5. Figure 3e illustrates the water stream collection efficiency of the panel as a function of the internal aperture angle (θ) with an aperture size: x = y = 4 mm, φ = 70° and β = 0°, such that when θ = 90° the aperture shape is square. Error bars in all cases are ±1 standard deviations and, if absent, are smaller than symbol size.

Turning now to Figures 1c and 4, in certain cases it is of advantage to provide a multilayer assembly as shown in Figure 1c which shows schematically the offset configuration of a double panel assembly in which the panels are offset by the distance Y such that the junctions of members 4' 4" in one panel are positioned to overlie the centre of the apertures of the other panel.

Testing of the multilayer assembly was performed and, in Figure 4a there is shown the water sprinkler collection efficiencies of single and double layer panels as a function of the aperture pore size x = y, θ = 45°, φ = 70°, β = 0° and with a spacing X between the panels of 3 mm. Figure 4b illustrates the water sprinkler collection efficiency of the double layer panel assembly as a function of the separation distance, d, between the panels 2, 2' with an aperture size: x = y = 4 mm, θ = 45°, β = 0° and φ = 70°).

Figure 4c illustrates the water sprinkler collection efficiency of the double layer panel assembly as a function of the percentage of visible light transparency through the panels as the pore size is increased (pore size: x = y, θ = 45°, β = 0°, φ = 70° and the separation distance between the layers is 3 mm). The large error seen on the value for water on the mesh at 53% light transparency is due to the transition region between the water running completely off the mesh and passing completely through the mesh, at this angle. Error bars in all cases are ±1 standard deviation and, if absent, are smaller than symbol size.

In one embodiment plasma treatments can be carried out on the panel and when performed, in this embodiment, were performed in a cylindrical glass reactor (5 cm diameter, 470 cm³ volume) enclosed within a Faraday cage. This was connected to a two stage rotary pump via a liquid nitrogen cold trap. An inductor-capacitor (L-C) impedance matching unit was used to minimise the standing wave ratio (SWR) for the power transmitted from a 13.56 MHz radio frequency generator (ENI Power Systems, model ACG-3) to a copper coil (4.7 mm diameter, 10 turns, spanning 8 cm) externally wound around the glass reactor. Prior to each plasma treatment, the chamber was scrubbed with detergent, rinsed in propan-2-ol (99.5%, Fischer Scientific Ltd.), and further cleaned using a 50 W air plasma for 30 min.

For plasma treatment, the monomer/gas was admitted into the system via a needle valve, and the electrical discharge ignited. Upon completion of plasma treatment, the gas feed was turned off, and the chamber vented to atmosphere. Suitable plasma treatments include using tetramethylsilane (TMS) (99.9 %, Alfa Aesar), and 1H,1H,2H,2H-Perfluorooctyl acrylate (PFAC-6) (95 %, Fluorochem Ltd.), in the conditions shown below:

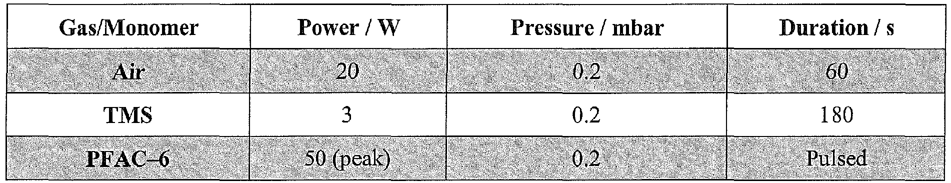

The TMS was first purified by freeze pump thaw for 3 cycles, while PFAC-6 was deposited using a pulsed treatment with an overall duration of 10 minutes, with the pulse duty cycle time on as 20 µs and the time off as 20 ms.

Static Water Contact Angle Measurement was performed at 20 °C with a video contact angle system (VCA 2500 XE, AST Products) using a 1.0 µL droplet of high purity water (BS 3978 grade 1). Static contact angle measurement was taken after 3 s and there was no visible change in the droplet shape during this period.

The water collection measurement of the water stream was achieved in a first embodiment using a liquid stream generated from a 25.00 ml burette (average flow rate = 814 ± 5 µl s⁻¹, diameter of burette outlet = 0.5 mm) with the sample mounted at an angle, φ, to the vertical, with a clamp. The stream is directed to hit the surface of the sample and has an impact cross-section of 1.96 mm². The volume of the liquid stream that passed through the sample was measured from the volume of liquid collected in trough B, Figure 3a. The volume of water collected from trough A, coupled with that from trough B, enabled measurement of the liquid residue left on the sample and the collection troughs. These measurements were then used to determine the percentage of the liquid that passed through the sample. Each data point was repeated 10 times. Trough A was a crystallisation dish with a diameter of 140 mm, while trough B was a 100 ml beaker (4.7 cm diameter).

The water collection measurement of the water was achieved in a second embodiment using a water sprinkler in which the volume of water, from the sprinkler, through the sample was measured from the volume of water collected in trough B, Figure 3a. Rain impact onto the sample was emulated using a 60 ml syringe attached to a sprinkler head (flow rate = 3.7 ± 0.3 ml s⁻¹). The sprinkler head has 7 holes (of 1 mm diameter) over an area of 9.62 cm² which results in a water spray cross-section of 9.62 cm² across the surface of the sample. The volume of water collected from trough A, coupled with that from trough B, enabled measurement of the liquid residue left on the sample and the collection troughs. These measurements were then used to determine the percentage of the liquid that passed through the sample. Each data point was repeated 10 times. Trough A was a crystallisation dish of dimensions: 26 cm by 26 cm by 6 cm, while trough B was a 250 ml beaker (6.9 cm diameter). For the double layer panel sample, the panels were offset so that junctions of one panel were positioned over the centre of the pores of the other panel.

The panel or panel assembly can be adapted to suit particular usage requirements. For example, for solar applications, in which the panel assembly would be used as at least part of a roof, the visible light transparency through the double layer panels of 40% correlates to less than 10% of the water sprinkled (simulated rain) dripping through (aperture size of x = y = 7 mm), Figure 4c. An alternative approach for maximising light transparency would be to provide a panel or panels similar to that shown in Figure 2 in which the number of members is reduced.

Other variations could include the puckering of the members on a macroscale. Figure 5 illustrates the manner in which the panel can be oriented with respect to the position and direction of impact of the liquid onto the surface of the same.

Figure 6a illustrates in plan the edge 20 of a portion of the panel 2 and this is the edge from which liquid which has passed across the surface 12 of the panel 2 leaves the panel surface 12. It will be seen that the edge 20 is serrated such that the liquid is directed to leave the edge at specific locations 24 thereby regulating the collection of the same.

Figure 6b illustrates an elevation of the edge 20 of a portion of the panel 2 and shows, as illustrated by the arrow, the direction in which liquid impacts onto the surface 12 of the panel 2. The panel 2 in this embodiment is corrugated, once again to encourage the collection of the liquid along specific channels and the dispensation of the same from specific locations 24, and which leaves the edge 20 of the panel 2 in the direction of arrows 22 for collection or drainage. This corrugation of the panel may be provided in conjunction with the serrated edge of Figure 6a or can be provided separately.

When the panel or panel assembly is used as part of a building wall or roof the same can be used to replace the conventional low-energy consumption methods for keeping large buildings ventilated which include the use of externally ventilated double walls (also known as double-skin curtain walls) in which the air within the cavity between the two walls (which are often made of glass) acts as a thermal insulator around the air conditioned interior rooms and is vented to the outside. The use of the panel assembly in accordance with the invention instead would reduce the costs further by negating the need to pump the air within the cavity to external vents.

This type of double wall panel is also used in waterproofing exterior walls, which is more commonly known as a panel cladding system. The use of the panel assembly in accordance with the invention could be used in the exterior wall to reduce damp seeping through exterior walls.

In a yet further use and in order to reduce pollution the panel or panel assembly can be used in the wet scrubbing of exhaust flue gases for chemical plants and power stations. Current methods involve pumping the gas through a fine spray of water to try to remove soot from the gas through its contact with the water droplets or by using a fine spray of a base to neutralise an acidic gas. In accordance with the invention this can be improved by pumping the gas through the multilayer assembly with a flow of water passing over them which creates a substantially continuous film that bridges across the apertures and therefore increases the percentage of gas that comes into contact with the water and thereby increases the cleaning effect.

The invention therefore provides apparatus which includes a panel, and the panel itself, for the at least partial collection and/or movement of liquid across a surface thereof, typically the surface on which the liquid impacts, said panel formed by a series of members which are respectfully located and formed so as to define a plurality of slots and/or apertures in the said panel whilst the same are provided in a form to ensure that a significant proportion of the liquid passes along the surface on which the same impacts to be collected and/or dispensed from the panel rather than passing through the said slots and/or apertures.

## Claims

1. Liquid collection and/or movement apparatus, said apparatus including at least one panel (2) formed by a series of members (4) which are respectively located and formed so as to define a plurality of slots and/or apertures (6) in the said panel which pass between a first face (12) and an opposing second face of the said at least one panel, the panel is formed with a first group of members (4') which are spaced apart and arranged substantially in parallel and a second group of members (4") which are spaced apart and arranged substantially in parallel and the said second group of members (4") are arranged at an angle offset to the members of the first group of members (4') so as to form a mesh with a repeating pattern across said at least one panel (2), **characterised in that** said at least one panel is an integral unitary structural panel and a support structure locates the said at least one panel (2) such that the first face (12) acts as an upward facing impact surface on which said liquid (10) impacts and locates said panel to lie at an angle to a horizontal plane which is greater than 10 so that the majority of said liquid (10) which impacts on said first face passes across said first face to one or more edges (20)of the at least one panel rather than pass through said plurality of slots and/or apertures (6).

2. Apparatus according to claim 1 wherein a third group of members are provided which are spaced apart and arranged substantially parallel at an angle offset to the members (4') of the first group and at an angle substantially equal to but opposing that of the members (4") of the second group.

3. Apparatus according to any of the preceding claims wherein the said members (4) are arranged so as to form a series of substantially diamond, parallelogram or polygon shaped apertures across the panel.

4. Apparatus according to claim 1 wherein the panel parameters which are controlled for the said panel include any, or any combination, of the size of the aperture (6) defined by the respective members, the shape of the aperture, the angle of offset of the respective members, the arrangement of the mesh pattern with respect to the direction or directions from which the liquid will impact on the panel in use, the arrangements of the mesh pattern with respect to the direction or directions from which the liquid will collect and/or the tilt angle of the panel.

5. Apparatus according to claim 1 wherein the position of the support structure in use is determined and controlled such that the incident liquid stream (10) which contacts with the structure will contact with the panel (2) within a predetermined angle range in order to allow the water movement and/or collection performance of the panel to be achieved within a predetermined efficiency range.

6. Apparatus according to claim 1 wherein the panel (2) is tilted by 20° or more from the horizontal (φ = 70°).

7. Apparatus according to claim 1 wherein the surface wettability of the panel (2) is controlled in order to control an increase in the value of φ at which the panel will start to allow liquid to pass through the apertures in the panel.

8. Apparatus according to any of the preceding claims wherein the panel (2) has formations provided thereon which encourage the flow of liquid thereacross to one or more predefined locations.

9. Apparatus according to claim 8 wherein the panel is formed with a plurality of substantially V or U shaped channels at least adjacent the edge (20) of the panel (2) from which the liquid leaves the same so as to encourage the liquid to flow along said channels as it leaves the said surface (12)of the panel.

10. Apparatus according to any preceding claim wherein at least the surface (12) of the panel (2) on which the liquid (10) impacts, is subjected to one or more surface treatments.

11. Apparatus according to claim 10 wherein the treatment is plasma treatment.

12. Apparatus according to claim 1 wherein at least the surface (12) of the panel (10) on which the liquid impacts is provided so as to act as a switching surface by being oleophobic, oleophilic, hydrophobic and/or hydrophilic and having a breathable mesh structure for liquid diversion.

13. Apparatus according to claim 1 wherein the panel (2) acts as a filtration means to allow separation of solids from a liquid (10) which impact onto the surface of the panel or to allow the separation of different liquids which impact onto the panel.

14. Apparatus according to claim 1 wherein at least some of the members are surface formed so as to be puckered.

15. Apparatus according to claim 1 wherein at least two of said panels (2) are provided substantially in parallel and spaced apart by a predetermined distance.

16. Apparatus according to claim 15 wherein the said panels (2) are provided with mesh patterns of different configurations.

## Patentansprüche

1. Flüssigkeitssammlungs-/-bewegungsvorrichtung, wobei die genannte Vorrichtung mindestens eine Platte (2) umfasst, die von einer Reihe von Elementen (4) gebildet wird, die jeweils so positioniert und gebildet sind, dass sie eine Vielzahl von Schlitzen und/oder Öffnungen (6) in der genannten Platte definieren, die zwischen einer ersten Seitenfläche (12) und einer entgegengesetzten zweiten Seitenfläche der genannten mindestens einen Platte verlaufen, wobei die Platte von einer ersten Gruppe von Elementen (4'), die voneinander beabstandet und im Wesentlichen parallel angeordnet sind, und einer zweiten Gruppe von Elementen (4"), die voneinander beabstandet und im Wesentlichen parallel angeordnet sind, gebildet wird und die genannte zweite Gruppe von Elementen (4") winkelversetzt zu den Elementen der ersten Gruppe von Elementen (4) angeordnet ist, um über die genannte wenigstens eine Platte (2) ein Gitter mit einem sich wiederholenden Muster zu bilden, **dadurch gekennzeichnet, dass** die genannte mindestens eine Platte eine integrale einstückige Bauplatte ist und eine Trägerkonstruktion die genannte mindestens eine Platte (2) positioniert, so dass die erste Seitenfläche (12) als eine nach oben gekehrte Aufprallfläche wirkt, auf die die genannte Flüssigkeit (10) prallt, und die genannte Platte so positioniert, dass sie in einem Winkel zu einer horizontalen Ebene liegt, der größer als 10° ist, so dass die Mehrheit der genannten Flüssigkeit (10), die auf die genannte erste Seitenfläche prallt, über die genannte erste Seitenfläche zu ein oder mehr Rändern (2) der mindestens einen Platte strömt, anstatt durch die genannte Vielzahl von Schlitzen und/oder Öffnungen (6) hindurchzuströmen.

2. Vorrichtung nach Anspruch 1, wobei eine dritte Gruppe von Elementen bereitgestellt ist, die voneinander beabstandet sind und im Wesentlichen parallel winkelversetzt zu den Elementen (4') der ersten Gruppe und in einem Winkel, der im Wesentlichen gleich, aber dem der Elemente (4") der zweiten Gruppe entgegengesetzt angeordnet ist.

3. Vorrichtung nach einem der vorhergehenden Ansprüche, wobei die genannten Elemente (4) so angeordnet sind, dass sie über die Platte eine Reihe von im Wesentlichen rauten-, parallelogramm- oder polygonförmigen Öffnungen bilden.

4. Vorrichtung nach Anspruch 1, wobei die Plattenparameter, die für die genannte Platte geregelt sind, eines oder eine Kombination der Folgenden umfassen: die Größe der von den jeweiligen Elementen definierten Öffnung (6), die Form der Öffnung, den Versatzwinkel der jeweiligen Elemente, die Anordnung des Gittermusters in Bezug auf die Richtung oder Richtungen, aus der bzw. denen die Flüssigkeit im Gebrauch auf die Platten prallt, die Anordnungen der Gittermuster in Bezug auf die Richtung oder Richtungen, aus der bzw. denen die Flüssigkeit sich sammelt, und/oder der Neigungswinkel der Platte.

5. Vorrichtung nach Anspruch 1, wobei die Position der Trägerkonstruktion im Gebrauch so bestimmt und geregelt ist, dass der einfallende Flüssigkeitsstrom (10), der mit der Konstruktion in Kontakt kommt, innerhalb eines vorbestimmten Winkelbereichs mit der Platte (2) in Kontakt kommt, um zu ermöglichen, dass die Wasserbewegungs- und/oder -sammlungsleistung der Platte innerhalb eines vorbestimmten Wirkungsgradbereichs erzielt wird.

6. Vorrichtung nach Anspruch 1, wobei die Platte (2) um 20° oder mehr aus der Horizontalen (φ = 70°) geneigt ist.

7. Vorrichtung nach Anspruch 1, wobei die Oberflächenbenetzbarkeit der Platte (2) geregelt ist, um eine Erhöhung des Werts φ zu regeln, bei dem die Platte Flüssigkeit durch die Öffnungen in der Platte durchzulassen beginnt.

8. Vorrichtung nach einem der vorhergehenden Ansprüche, wobei die Platte (2) an ihr bereitgestellte Gebilde aufweist, die den Flüssigkeitsstrom über sie hin zu ein oder mehr vordefinierten Positionen fördert.

9. Vorrichtung nach Anspruch 8, wobei die Platte zumindest an den Rand (20) der Platte (2) angrenzend, von dem die Flüssigkeit dieselbe verlässt, mit einer Vielzahl von im Wesentlichen V- oder U-förmigen Rillen ausgebildet ist, um das Strömen der Flüssigkeit entlang der genannten Rillen beim Verlassen der genannten Oberfläche (12) der Platte zu fördern.

10. Vorrichtung nach einem der vorhergehenden Ansprüche, wobei zumindest die Oberfläche (12) der Platte (2), auf die die Flüssigkeit (10) prallt, ein oder mehr Oberflächenbehandlungen unterzogen wird.

11. Vorrichtung nach Anspruch 10, wobei die Behandlung Plasmabehandlung ist.

12. Vorrichtung nach Anspruch 1, wobei zumindest die Oberfläche (12) der Platte (10), auf die die Flüssigkeit prallt, so beschaffen ist, dass sie als Schaltfläche wirkt, indem sie oleophob, oleophil, hydrophob und/oder hydrophil ist und eine atmungsaktive Gitterstruktur zur Ableitung von Flüssigkeit aufweist.

13. Vorrichtung nach Anspruch 1, wobei die Platte (2) als eine Filtereinrichtung wirkt, um die Trennung von Feststoffen von einer Flüssigkeit (10), die auf die Oberfläche der Platte prallt, zu ermöglichen oder die Trennung verschiedener Flüssigkeiten, die auf die Platte prallen, zu ermöglichen

14. Vorrichtung nach Anspruch 1, wobei zumindest einige der Elemente oberflächlich gebildet sind, um höckerig zu sein.

15. Vorrichtung nach Anspruch 1, wobei mindestens zwei der genannten Platten (2) im Wesentlichen parallel und um einen vorbestimmten Abstand voneinander beabstandet bereitgestellt sind.

16. Vorrichtung nach Anspruch 15, wobei die genannten Platten (2) mit Gittermustern verschiedener Ausgestaltungen versehen sind.

## Revendications

1. Appareil de collecte et/ou de déplacement de liquide, ledit appareil incluant au moins un panneau (2) formé par une série d'éléments (4) qui sont respectivement localisés et formés de sorte à définir une pluralité de fentes et/ou d'ouvertures (6) dans ledit panneau qui passent entre une première face (12) et une deuxième face opposée dudit au moins un panneau, le panneau étant formé avec un premier groupe d'éléments (4') qui sont écartés les uns des autres et agencés substantiellement en parallèle et un deuxième groupe d'éléments (4") qui sont écartés les uns des autres et agencés substantiellement en parallèle et ledit deuxième groupe d'éléments (4") étant agencés suivant un certain angle qui est décalé par rapport aux éléments du premier groupe d'éléments (4') de sorte à former un maillage avec un motif de répétition en travers dudit au moins un panneau (2), **caractérisé en ce que** ledit au moins un panneau est un panneau structurel unitaire d'un seul tenant et une structure de support localise ledit au moins un panneau (2) de telle sorte que la première face (12) agisse en tant que surface d'impact dirigée vers le haut sur laquelle tombe ledit liquide (10) et localise ledit panneau pour qu'il se trouve à un certain angle par rapport à un plan horizontal qui est supérieur à 10° de sorte que la majorité dudit liquide (10) qui tombe sur ladite première face passe en travers de ladite première face jusqu'à un ou plusieurs bords (20) de l'au moins un panneau plutôt que de passer à travers ladite pluralité de fentes et/ou d'ouvertures (6).

2. Appareil selon la revendication 1 dans lequel un troisième groupe d'éléments sont prévus qui sont écartés les uns des autres et agencés substantiellement en parallèle suivant un certain angle qui est décalé par rapport aux éléments (4') du premier groupe et suivant un certain angle substantiellement égal à mais opposé à celui des éléments (4") du deuxième groupe.

3. Appareil selon n'importe lesquelles des revendications précédentes dans lequel lesdits éléments (4) sont agencés de sorte à former une série d'ouvertures substantiellement en forme de losange, de parallélogramme ou de polygone en travers du panneau.

4. Appareil selon la revendication 1 dans lequel les paramètres de panneau qui sont contrôlés pour ledit panneau incluent n'importe lequel, ou n'importe quelle combinaison, parmi la taille de l'ouverture (6) définie par les éléments respectifs, la forme de l'ouverture, l'angle de décalage des éléments respectifs, l'agencement du motif de maillage par rapport à la direction ou aux directions à partir de laquelle/desquelles le liquide va tomber sur le panneau en utilisation, les agencements du motif de maillage par rapport à la direction ou aux directions à partir de laquelle/desquelles le liquide va se collecter et/ou l'angle d'inclinaison du panneau.

5. Appareil selon la revendication 1 dans lequel la position de la structure de support en utilisation est déterminée et contrôlée de telle sorte que le flux de liquide incident (10) qui entre en contact avec la structure va entrer en contact avec le panneau (2) au sein d'une gamme d'angles prédéterminée pour permettre à ce que le mouvement de l'eau et/ou la performance de collecte du panneau puisse/nt être obtenu/s au sein d'une gamme d'efficacité prédéterminée.

6. Appareil selon la revendication 1 dans lequel le panneau (2) est incliné de 20° ou davantage par rapport à l'horizontale (φ = 70°).

7. Appareil selon la revendication 1 dans lequel la mouillabilité de surface du panneau (2) est contrôlée afin de contrôler une augmentation dans la valeur de φ à laquelle le panneau va commencer à laisser passer le liquide à travers les ouvertures dans le panneau.

8. Appareil selon n'importe lesquelles des revendications précédentes dans lequel le panneau (2) a des formations qui sont prévues sur celui-ci qui encouragent l'écoulement de liquide en travers de celles-ci vers une ou plusieurs localisations prédéfinies.

9. Appareil selon la revendication 8 dans lequel le panneau est formé avec une pluralité de canaux substantiellement en forme de V ou d'U au moins en position adjacente au bord (20) du panneau (2) à partir duquel le liquide s'évacue de celui-ci de sorte à encourager le liquide à s'écouler le long desdits canaux au fur et à mesure qu'il s'évacue de ladite surface (12) du panneau.

10. Appareil selon n'importe quelle revendication précédente dans lequel au moins la surface (12) du panneau (2) sur lequel tombe le liquide (10), est soumise à un ou plusieurs traitements de surface.

11. Appareil selon la revendication 10 dans lequel le traitement est un traitement au plasma.

12. Appareil selon la revendication 1 dans lequel au moins la surface (12) du panneau (10) sur lequel tombe le liquide est prévue de sorte à agir en tant que surface de commutation du fait qu'elle est oléophobe, oléophile, hydrophobe et/ou hydrophile et a une structure de maillage respirante pour une diversion de liquide.

13. Appareil selon la revendication 1 dans lequel le panneau (2) agit en tant que moyen de filtration pour permettre une séparation des solides d'un liquide (10) qui tombe sur la surface du panneau ou pour permettre la séparation de différents liquides qui tombent sur le panneau.

14. Appareil selon la revendication 1 dans lequel au moins quelques-uns des éléments sont formés en surface de sorte à pouvoir être froncés.

15. Appareil selon la revendication 1 dans lequel au moins deux desdits panneaux (2) sont prévus substantiellement en parallèle et écartés les uns des autres suivant une distance prédéterminée.

16. Appareil selon la revendication 15 dans lequel lesdits panneaux (2) sont pourvus de motifs de maillage de différentes configurations.
